# EUROPEAN PATENT APPLICATION

(11) **EP 2 113 616 A1**
(43) Date of publication of application: **04.11.2009**
(21) Application number: 07710992.4
(22) Date of filing: 15.02.2007
(51) Int. Cl.: E04B 1/00, G06F 17/50

(54) **A CPAD SYSTEM FOR PREFAB FRAME BUILDING WITH FULL-FUNCTION AND A METHOD THEREOF**

(71) Applicant: Shanghai Precision Houses Manufacturing Co., Ltd., Xiroad Fengxian District Shaanxi 201401 (CN)
(72) Inventor: ZHANG, Yueyue, Shanghai 201401 (CN); DING, Xiaoyue, Shanghai 201401 (CN); XU, Tianwen, Shanghai 201401 (CN)
(74) Representative: Jaunez, Xavier
(86) International application number: PCT/CN2007/000574
(87) International publication number: WO 2008/043220

(57) **Abstract**

A computerized prefab architect design system (CPAD) and method for the fabrication of frame-structured buildings with all functions, including an integrating device for integrating building design elements including customer acknowledged floor plans, plumbing layouts, electricity wiring layouts and structure/strength parameters into an assembly drawing; a dividing device for forming segments and layouts of wall panels, floor/ceiling panels and roof panels, layouts of roof trusses, and segments and layouts of plumbing, wiring and jointers in accordance with a segmentation rule for buildings comprising a local building specification, segmentation based on a loading size of a shipping container, strength and structural requirements of buildings, requirements for convenient on-site work and flexible assembly lines at factories; a generating device for generating a polygon stencil for components of the prefab architect based on said segments and layouts, said stencil including building frames, functional boards to be mounted onto the frames and functional accessories and appliances; and an outputting device for forming data including a list of materials, an electronic guide display, CAM files, container loading plans and assembly drawings for on-site work in accordance with requirements for the fabrication in said stencil. This invention comprises also a computer controlled fabrication system and method, with CPAD system and method included, for all-functional prefab framed buildings, an all-functional prefab framed building structure fabricated by utilizing the described system and method, and a quick method to assembly on site the described all-functional prefab framed buildings.

## Description

### I. Field of the Invention

The present invention generally relates to fabrication systems and structures of prefab buildings. In particular, it relates to computer controlled prefab system for all-functional prefab framed buildings, all-functional prefab framed building structures fabricated by utilizing the mentioned system and a quick assembling method thereof.

### 2. Background

It is still impossible for builders to completely get rid of on-site construction. However, it is imperious for them to be able to build in a way similar to fabricate and assembly machines so as to enhance the efficiency of building. After continuous efforts, there have been some kinds of factory-fabricated building systems that can be summarized according to their different degrees of factory integration into three major categories, which are kit home sets, prefab panelized building systems and modular building systems. As for the first two categories, they are at lower degree of factory integration, of limited precision and functions of the components, and still in need of a large amount of traditional on-site construction work, such as painting, tiling, arranging roof trusses, plumbing, wiring, cutting and welding, etc. As for the modular building systems, they are of limited building functions, difficult to be transported to distant locations, and compromised by the lack of individuality of buildings, although they are at higher degree of factory integration and in need of less on-site construction work. For example, some prefab building systems are disclosed in U.S. Pat. No. US6,951,079; US6,651,393; US4,378,664; US6,088,970; US6,253,521; US6,959,514 and Chinese Patent Application 200410022604.2; 02256168.4; 03236966.2; 94103337.6; 00201861.6. From another point of view, due to structure requirements, in general, the higher degree of factory integration there is, the less traditional on-site construction is needed, but the more difficult the long-distance container transportation is, hence lower possibility to achieve business success of large scale. Therefore, the contradiction between large-scale industrialized fabrication and individuality of buildings are not resolved in the current prefab building systems. It is thus needed to have computerized control and management over the whole process of building design, fabrication and business operation, so as to realize a custom-designed building system that is fabricated at factory, container transportable and can be quickly assembled on site.

### SUMMARY OF THE INVENTION

In one aspect of this invention, there is provided a computerized prefab architect design (CPAD) system that comprises:
an integrating device for integrating customer acknowledged building design elements including floor plans, plumbing layouts, electricity wiring layouts and structure/strength parameters into an assembly drawing;
a dividing device for forming segments and layouts of wall panels, floor/ceiling panels and roof panels, layouts of roof trusses, and segments and layouts of plumbing, wiring and jointers in accordance with a segmentation rule for buildings comprising a local building specification, segmentation based on a loading size of a shipping container, strength and structural requirements of buildings, requirements for convenient on-site work and flexible assembly lines at factories;
a generating device for generating a polygon stencil for components of the prefab architect based on said segments and layouts, said stencil including building frames, functional boards to be mounted onto the frames and functional accessories and appliances; and
an outputting device for forming data including a list of materials, an electronic guide display, CAM files, container loading plans and assembly drawings for on-site work in accordance with requirements for the fabrication in said stencil.

In another aspect of this invention, there is provided a computer controlled fabrication system for all-functional prefab framed buildings that comprises:
a computerized prefab architect design (CPAD) system comprising:
   an integrating device for integrating customer acknowledged building design elements including floor plans, plumbing layouts, electricity wiring layouts and structure/strength parameters into an assembly drawing;
   a dividing device for forming segments and layouts of wall panels, floor/ceiling panels and roof panels, layouts of roof trusses, and segments and layouts of plumbing, wiring and jointers in accordance with a segmentation rule for buildings comprising a local building specification, segmentation based on a loading size of a shipping container, strength and structural requirements of buildings, requirements for convenient on-site work and flexible assembly lines at factories;
   a generating device for generating a polygon stencil for components of the prefab architect based on said segments and layouts, said stencil including building frames, functional boards to be mounted onto the frames and functional accessories; and
   an outputting device for forming data including a list of materials, an electronic guide display, CAM files, container loading plans and assembly drawings for on-site work in accordance with requirements for the fabrication in said stencil;
   an intelligent manufacture management system and manufacture dispatch system (IMMS & MDS) comprising ;
   a replacing device for replacing default specifications with customer selected individualized specifications;
   a planning device for generating dada including task lists for assembly and pre-process, a list of materials and a dispatch order to work stations;
   a pre-processing device for CAM pre-processing precise parts and components based on said CAM files, and/or for pre-processing attached facilities of said functional accessories based on said electronic guide display;
   a dispatching device for dispatching materials, pre-processed parts and components and the attached facilities of said functional accessories to corresponding work stations in accordance with said list of materials; and
   an assembling device for assembling said polygon stencil in accordance with said electronic guide display into all-functional prefab framed building components suitable for container loading.

In another aspect of this invention, the computer controlled fabrication system for all-functional prefab framed buildings also comprises an interactive selection system (ISS), comprising:
a database device for storing various designed types of buildings and configuration selection modules thereof;
a quotation generating device for generating a quotation in accordance with a customer-selected type of buildings and a configuration selection module thereof; and
an order acknowledgement device for forming an inquiry form in accordance with a customers' acknowledgement for said quotation, and after admission for manufacture, said inquiry form forms an official order to IMMS & MDS.

In another aspect of this invention, there is provided an all-functional prefab framed building structure fabricated by the above system comprising:
a plurality of wall panels, at least one of said plurality of wall panels comprising a wall frame, a functional board arranged on the wall frame and connectors and locators for connecting and fastening the wall panel to another wall panel, to a foundation slab and to ceiling/flooring panels;
a ceiling panel comprising a ceiling frame, a functional board arranged on the ceiling frame and connectors and locators for connecting and fastening the ceiling panel to the wall panels;
a plurality of roof trusses comprise roof truss frames, connectors arranged on the roof truss frames for connecting and fastening roof trusses to each other, to the wall panels and to the ceiling panel, and roof locators for arranging roof; and
a plurality of roof panels comprising roof frames and tiles arranged on the roof.

In another aspect of this invention, there is provided a method for quickly assembling the mentioned all-functional prefab framed building structure comprising the steps of:
a. mounting wall panel locators on a foundation slab;
b. fastening a plurality of wall panels on the foundation slab;
c. connecting said plurality of wall panels using connectors and locators;
d. connecting a ceiling panel to said wall panels using connectors;
e. positioning and fastening roof trusses to the ceiling panel using a locating device; and
f. locating and fastening roof panels to the roof trusses using locators and fasteners.

This invention may be utilized to realize the customized building designs, fabrication, constructions and business operations and to form whole sets of customized all-functional framed structures, building elements and assemblies, as well as various well-assorted functional connectors. Most of the mentioned building elements and assemblies are panel like components and some others are structural components such as polygonal frames and trusses, comprising wall panels, flooring panels, ceiling panels, beams, joists, ring beams, lattice beams, roof trusses and roof panels, etc. wherein some components may be pre-assembled with one or more facilities, such as cold and hot water supply facilities and fittings, gas facilities and fittings, drainage and sewage facilities and fittings, power system and fittings, communication system and fittings, security system and fittings, multimedia system and fittings, windows and doors, etc. The mentioned building elements and assemblies are container transportable. A usable building is established by assembling the mentioned prefab building elements, assemblies and attachments using general mechanical fasteners in a mechanical way, instead of large amount of traditional construction work. Such a building system, compared with the traditional ones, requires more precisely fabricated building elements and/or assemblies, including independent and dependent elements and/or assemblies, as well as parts, hence, for customer-designed buildings, it must be supported by a computer controlled fabrication and on-site quick assemble system. This invention may be utilized to realize the scale production of individualized buildings with precision, efficiency and speed, by way of transforming a large amount of traditional construction works into a process in factory environment and a mechanical assembly method on building site, so that construction waste, labors, building time and consumed energy may be significantly reduced.

### BRIEF DESCRIPTION OF THE DRAWINGS

The prefab system, structure and assembling method for all-functional framed buildings of the present invention are described in combination with the figures and embodiments as follows. These and other purposes, features and effects of this invention will be apparent from the following descriptions. In the accompanying figures, there are shown embodiments of this invention wherein like reference numerals are employed to designate like parts and wherein:
FIG. 1 illustrates a floor plan of a building provided by a customer;
FIG. 2 illustrates a schematic view in a CAD format readable by the computer system and transformed from FIG 1;
FIG. 3 illustrates a schematic block view of the computerized prefab architect design (CPAD) system of this invention;
FIG. 4 illustrates a schematic view of a flow chart of the computerized prefab architect design (CPAD) system of FIG. 3;
FIG 5 illustrates a schematic view of the intelligent manufacture management system and manufacture dispatch system (IMMS & MDS) of this invention;
FIG. 6 illustrates a schematic view of a flow chart of the intelligent manufacture management system and manufacture dispatch system (IMMS & MDS) of FIG 5;
FIG 7 illustrates a schematic view of a flow chart of the inter-active selection system of this invention;
FIGS. 8 to 13 illustrate respectively schematic views of the embodiments of the components of all-functional prefab framed buildings of this invention;
FIGS. 14 to 26 illustrate respectively schematic views of the connecting and assembling points of the embodiments of the components of all functional prefab framed buildings of this invention;
FIG 27 illustrates a schematic view of one embodiment of an assembled building of this invention;
FIG 28 illustrates a schematic view of one embodiment of a detailed decorating method for wall panel connection.

### DETAILED DESCRIPTION OF THE PREFERRED EMBODIMENTS

According to this invention, three dimensional frame-structured buildings are properly divided into two dimensional constructional elements and assemblies with smaller thickness, so that whole sets of container transportable all-functional frame-structure constructional elements and assemblies and various well-assorted functional connectors can be precisely customized at factories as required. Most of the mentioned elements and assemblies are panel like components and some others are structural components such as polygonal frames and trusses. The mentioned elements and assemblies may comprise wall panels, flooring panels, ceiling panels, beams, joists, ring beams, lattice beams, roof trusses and roof panels, etc., wherein some components may be pre-attached with one or more facilities, such as cold/hot water supply facilities and fittings, gas facilities and fittings, drainage and sewage facilities and fittings, power system and fittings, communication system and fittings, security system and fittings, multimedia system and fittings, and windows and doors, etc. Because of the utilization of the mentioned computer controlled system in fabrication, the building elements, assemblies and parts of this framed building system are more precise compared with the traditional ones, the traditional on-site construction work can be significantly reduced, and the prefab building elements, assemblies and functional connectors can be mechanically assembled into an usable building by utilizing general mechanical fasteners and auxiliary materials. This building system is adaptable to houses, apartments and buildings for other purposes.

The mentioned computer controlled fabrication system for all-functional prefab framed buildings comprises: an interactive selection system (ISS), a computerized prefab architect design (CPAD) system, an intelligent manufacture management system and manufacture dispatch system (IMMS & MDS), and a product service system (PSS).

The mentioned computer controlled system is built on an ERP (Enterprise Resource Project) platform, wherein individualized sales service to end users is facilitated for business cooperative partners of manufacturers by ISS that takes a business-to-business model when they sell constructional products. For the first time when a certain building design is decided on the ERP platform, the business cooperative partners only need to provide to the manufactures data required for building design such as floor plan, elevation plan, section plan and other technical specification for acknowledgement in both parties, and the CPAD performs custom design including strength calculation on the building according to the local construction code of the business cooperative partner to generate electronic files for fabrication such as JIT logistics, container loading plan, bill of materials, electronic guide display files including instruction documents for fabrication and container loading, and CAM files, etc. When the business cooperative partner sells an existing building design product, he will use ISS to facilitate marketing by allowing an end user to have various individual selections of interior functional structures and interior and exterior finishing of the selected building, such as exterior wall finishing, kitchen and bathroom fittings and appliances, and soft decorations, etc., via ISS and the selection results are transmitted via internet to the manufacturer for individualized production. In the process of production facilitated by IMMS & MDS, precise building elements and assemblies such as profiled framing materials and various kinds of boards for panel like components are processed by computer controlled equipment that utilizes the transmitted CAM files via intranet, various attached functional facilities such as water, electricity, communication, channels, wiring, and communication cabling, etc. are pre-processed according to the electronic guide display, and then the building elements and assemblies including doors and windows are assembled on the production lines and loaded into containers for transportation for production of all-functional and all assembled constructional elements and components. On the construction site, the whole set of products may be mechanically assembled into a building by utilizing a specially designed crane or other general cranes to quickly complete construction. Technical supports may be available via the product service system (PSS) that may also facilitate after-sale services.

In one aspect of this invention, details for construction are described in accordance with the applicable local building code such as the floor plan, elevation plan, section plan and other technical specification provided by a user and a detailed fabrication design including strength calculation is performed according to a suitable construction specification using a CPAD system.

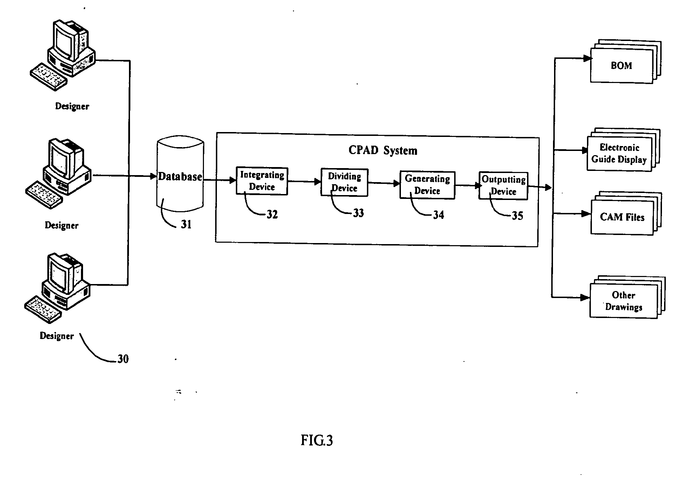

FIG 3 illustrates a schematic apparatus view of the computerized prefab architect design (CPAD) system of this invention.

As shown in FIG. 3, this CPAD system is a network-based CAD cooperating design system, comprising a CAD software based on Intranet and an external database 31 independent of the CAD software. By this CPAD system, data is synchronized, whenever there is a change in the assembly drawing, the system may make corresponding modifications based on the change and make accurate and quick modification to the whole product. Additionally, whenever there is a configuration option selected or disabled, there is an update of the part vault of CAD system without a need of rearrangement of parts in the CAD drawing, thus compatibility is automatically achieved and each part is assigned to an exclusively specified identification mark in all drawings, as a result, checking time is reduced. The mentioned data, comprising floor plans, layouts of plumbing system, layouts of electricity wiring, layouts of electric appliances and fittings, layouts of sanitary appliances and fixtures, layouts of air conditioning system, and parameters of structural strength, etc., is input into the CPAD system and integrated into assembly drawings by the integrating device 32. The mentioned assemblies and layouts of wall panels, flooring/ceiling panels, roof panels and layouts of roof trusses, as well as the segments and layouts of plumbing, wiring and cabling and jointers are formed by the dividing device 33. After the building is divided, stencils provided with polygons are generated by the generating device 34. The mentioned stencils are utilized by the CPAD system to generate frames, functional boards to be mounted onto the frames and various attached functional facilitates. The mentioned functional boards may comprise, for example, structural boards, covering boards, waterproofing layer, thermal insulation layer and interior and exterior finishing layers. The mentioned attached functional facilities may comprise, for example, windows, doors, plumbing, wiring and sockets, etc. The system extracts data on required materials from the database. Finally, the data are output by the outputting device 35, including detailed bills of materials, electronic guide displays, CAM files, loading plans and assembly drawings for on-site work, etc.

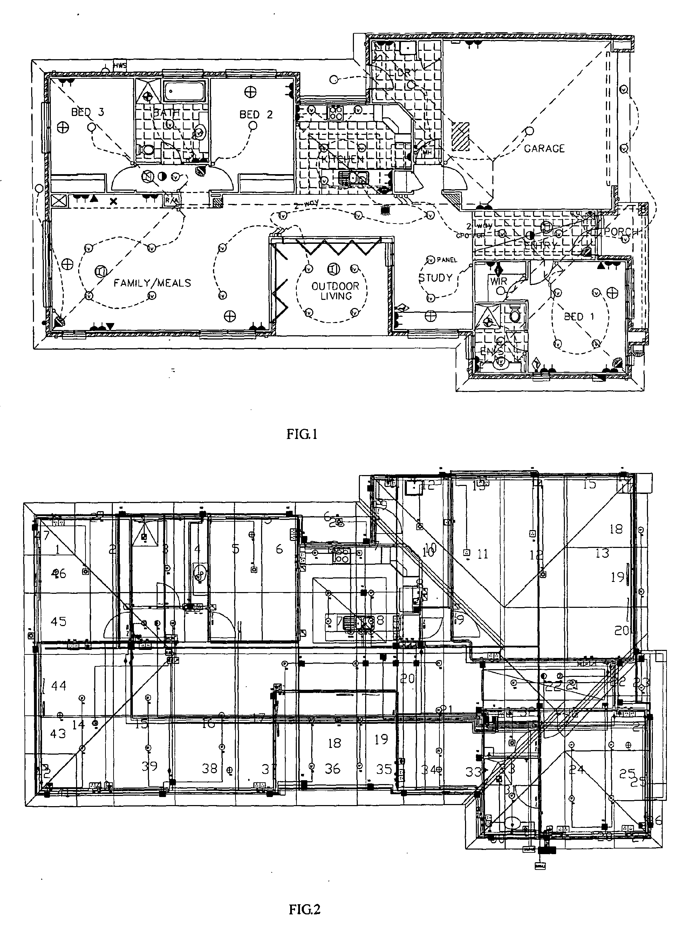

In the CPAD system, floor plans as illustrated in FIG 1 are transformed by designers 30 into the system-readable CAD format as illustrated in FIG. 2, and fabrication and assembly drawings for production lines to fabricate building elements and assemblies are automatically generated. The said drawings may comprise those for the fabrication and assembly of sandwiched (multilayered) components such as wall panels, ceiling panels, roof panels, flooring panels and ring beams, etc., and roof trusses and joists, etc. Furthermore, layouts of plumbing, electricity wiring, gas facilities and fittings, communication cabling, security system and multimedia system are automatically integrated into the said fabrication and assembly drawings for the building elements and assemblies in accordance with their functions in the building, and drawings for material cuttings are generated accordingly for the fabrication process.

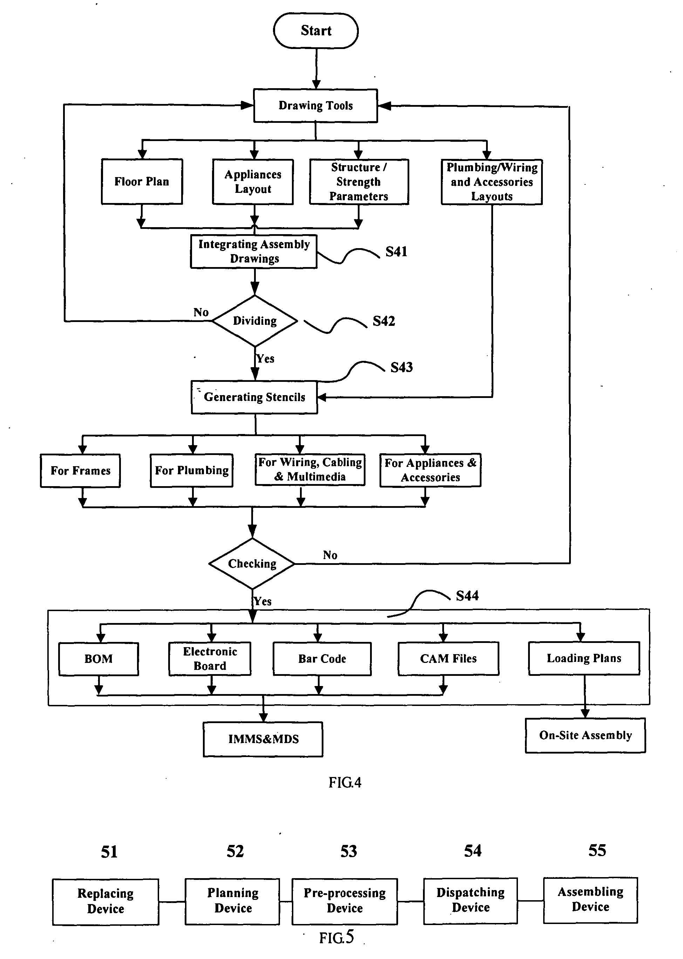

FIG. 4 illustrates a schematic view of a flow chart of the computerized prefab architect design (CPAD) system.

As illustrated in FIG. 4, at Step S41, the system integrates customer acknowledged building design elements including floor plans, plumbing layouts, electricity wiring layouts , layouts of electric appliances and fittings, layouts of sanitary appliances and fixtures, layouts of air conditioning system and structure/strength parameters into an assembly drawing. At Step S42, the system forms segments and layouts of wall panels, floor/ceiling panels and roof panels, layouts of roof trusses, and segments and layouts of plumbing, wiring and jointers in accordance with a segmentation rule for buildings comprising a local building specification, segmentation based on a loading size of a shipping container, strength and structural requirements of buildings, requirements for convenient on-site work and flexible assembly lines at factories. At Step S43, the system generates a polygon stencil for components of the prefab architect based on said segments and layouts, said stencil including building frames, functional boards to be mounted onto the frames and functional accessories and appliances and the stencils includes for example stencils of frames, plumbing layouts, electricity wiring layouts, gas facilities arrangements, communication cabling, security and multimedia layouts and appliances arrangements. At Step S44, the system forms data including a list of materials, an electronic guide display, CAM files, container loading plans and assembly drawings for on-site work in accordance with requirements for the fabrication in said stencils.

FIG 5 illustrates a schematic view of the intelligent manufacture management system and manufacture dispatch system (IMMS & MDS) of this invention.

As illustrated in FIG. 5, precise fabrication, correct loading and transportation, and quick assembly on building site of a customer selected building is guaranteed by the IMMS & MDS. In accordance with production orders, through Intranet, the results of detailed design for fabrication are imported by IMMS & MDS for making production plan and the replacing device 51 replaces default specifications with customer selected individualized specifications; and then the planning device 52 generates dada including task lists for assembly and pre-process, a list of materials and a dispatch order to work stations, etc. The pre-processing device 53 CAM pre-processes precise parts and components utilizing the CAM files that are transmitted through Intranet to the specified equipment, and/or functional accessories of attached facilities in accordance with the electronic guide display. By the dispatching apparatus 54, materials, pre-processed parts and components and functional accessories of attached facilities are precisely dispatched to corresponding work stations in the pre-processing and assembly lines in accordance with the bills of materials output from the CPAD that are linked with the warehouses and materials supply, and the electronic guide display for the pre-processing is transmitted to the work stations wherein instructions are given to guide operations such as cutting of pipes, wires and boards, etc.; and by the assembling device 55, the electronic guide display for assembly is transmitted to the work stations wherein instructions are given to guide operations to complete the compound building elements, assemblies and functional accessories, including making up frames, mounting boards on the frames, assembling various functional accessories and attachments such as windows and doors, pipes and wires, etc., and to load them into containers in accordance with the loading plan generated by the mentioned CPAD system. Connecting points and locating points of the components are precisely designed by the CPAD system and fabricated by digital controlled equipment so that precise location and assembly on building site are guaranteed. All finished and semifinished building elements, assemblies and functional accessories generated in the pre-processing and assembling process are controlled and checked by bar codes so that the correctness of manufacturing is assured. This process may accept the requirements for the products specified by the ISS and CPAD system.

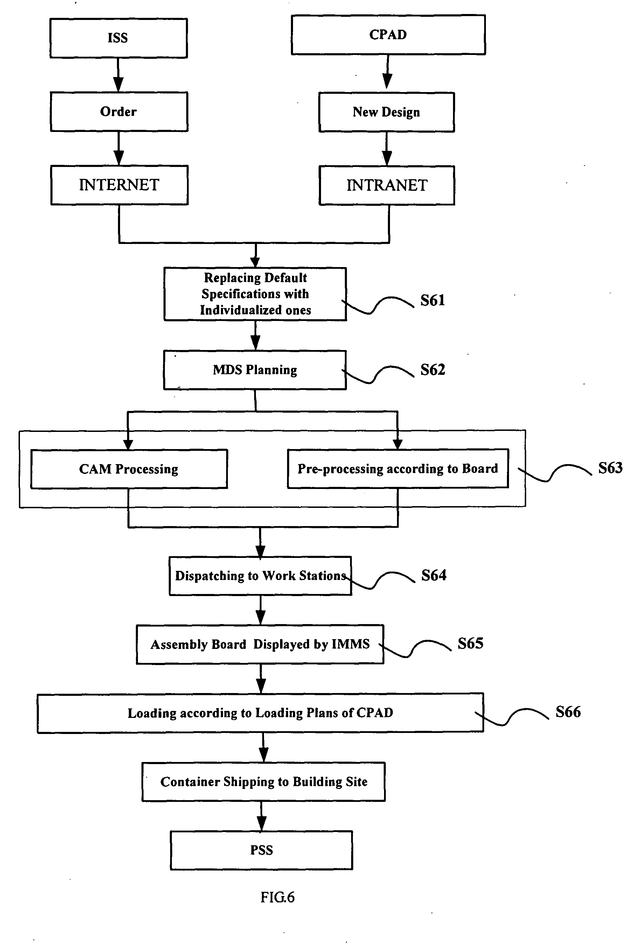

FIG. 6 illustrates a schematic view of a flow chart of the intelligent manufacture management system and manufacture dispatch system (IMMS & MDS) of FIG. 5.

As illustrated in FIG. 6, at Step 61, default specifications are replaced with customer selected individualized specifications. At Step 62, dada including task lists for assembly and pre-process, a list of materials and a dispatch order to work stations is generated. At Step 63, precise parts and components are CAM pre-processed based on said CAM files, and/or attached facilities of said functional accessories are pre-processed based on said electronic guide display. At Step 64, materials, pre-processed parts and components and the attached facilities of said functional accessories are dispatched to corresponding work stations in accordance with said list of materials. At Step 65, said polygon stencil is assembled in accordance with said electronic guide display into all-functional prefab framed building components suitable for container loading. At Step S66, containers are loaded in accordance with the loading plans generated by the CPAD system.

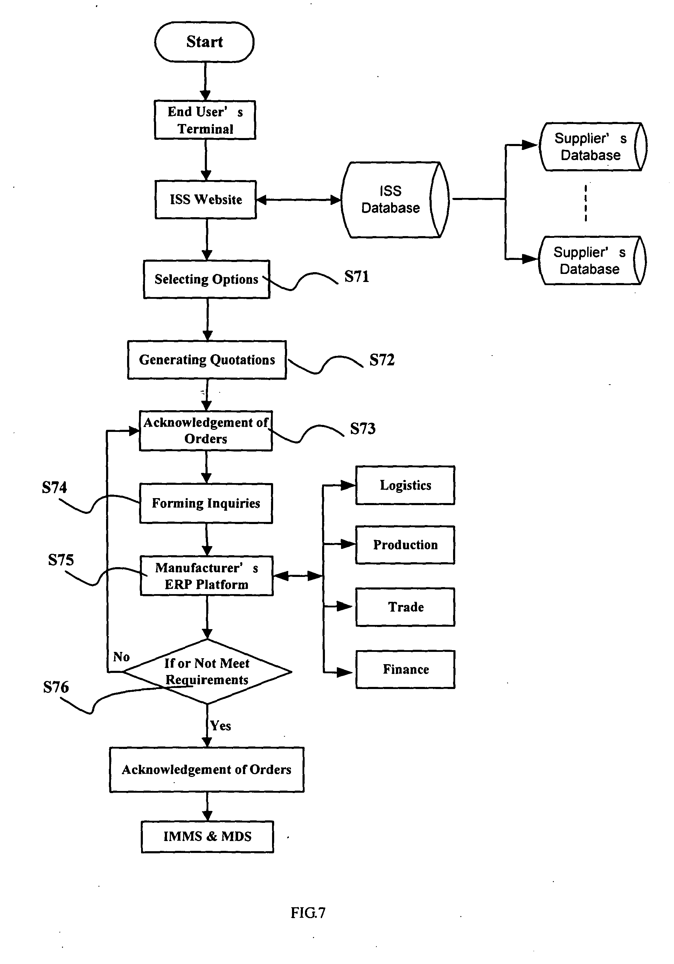

FIG 7 illustrates a schematic view of a flow chart of the inter-active selection system of this invention.

As illustrated in FIG 7, there is provided individuality for each building by ISS. ISS is also an effective system for sales management and marketing and uses a B-B electronic business model integrated on a ERP platform. As shown in Step S71, end users may be allowed to select their preferred building types and corresponding configuration selection modules demonstrated on the ISS platform via logging in the website of a manufacturer's business cooperative partner. There may be displayed in the ISS all the building types in which detailed designs for fabrication have been completed, including their floor plans, brief descriptions of the buildings and standard specifications including exterior and interior finishing and various fixtures and decorations. There may also be displayed in the ISS a wide range of options for a certain building and end users are allowed to select what they prefer, such as materials and colors of windows and doors, of exterior and interior finishing and of cabinets and robes, kitchen and bathroom fixtures and decorations, security systems and multimedia systems, etc. In the ISS, quotations may be offered and orders may be placed. At Step S72, quotations are generated for end users once certain buildings and their configurations are selected. At Step S73, orders after acknowledgement of the user may be placed through ISS to a business cooperative partner's management platform. At Step S74, inquiry form may be transmitted through ISS from the business cooperative partner to the manufacturer after acknowledgement thereof. At Step S75, the inquiry form is transmitted to relevant operational flows via an ERP platform, and may be judged at Step S76 whether or not the requirements of the inquiry can be met by utilizing corresponding data of the logistic module, the producing module, the trade module and the financial module, etc. If it is "Yes" at Step S76, an official order may be generated and automatically introduced to the IMMS & MDS to guide manufacture. If it is "No" at Step S76, it may return to Step S73 wherein the business cooperative partner has to have the order to be re-acknowledaged by the end user.

The following are examples of the prefab building elements, assemblies and the mechanical assembly method of this invention. However, it should be understood by technicians in this field that the following descriptions are only referred to the examples but not limits of this invention.

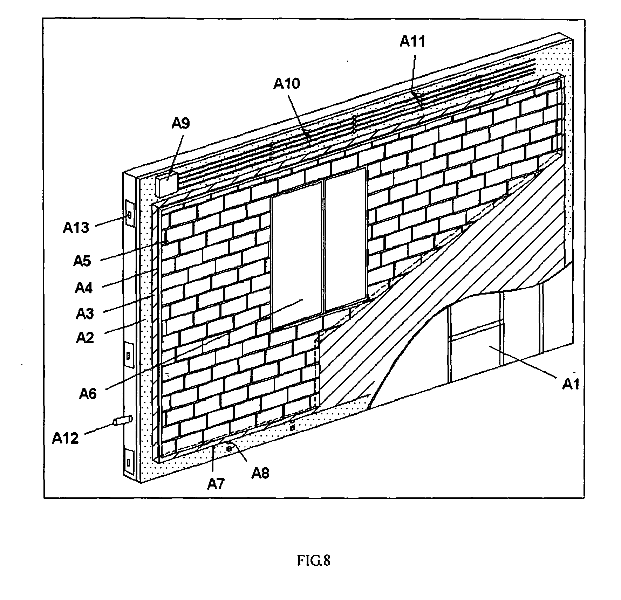

FIG 8 illustrates the exterior side of a wall panel of a house of this invention, wherein A1 is a structural frame, A2 is a structural board, A3 is an insulation board, A4 is a layer of waterproofing house wrap or reflective film, A5 is a cladding board, A6 is a window and window casing, A7 is a communication socket, A8 is a prefixed bracket for fixing a water pipe, A9 is a junction box for connecting wires on exterior walls, A10 are the main wires which at one end are connected to the junction box and at the other end has a connecting terminal, A11 is a wire clip, A12 is a water pipe, and A13 is a connector for assembly on building site. A1-A12 are parts to satisfy the structural and functional requirements of the building and A13 is to facilitate the quick assembly on building site and has a function of structural connection. It may be allowed to add or remove functions of a wall panel in accordance with the customer's requirements or the applicable building codes.

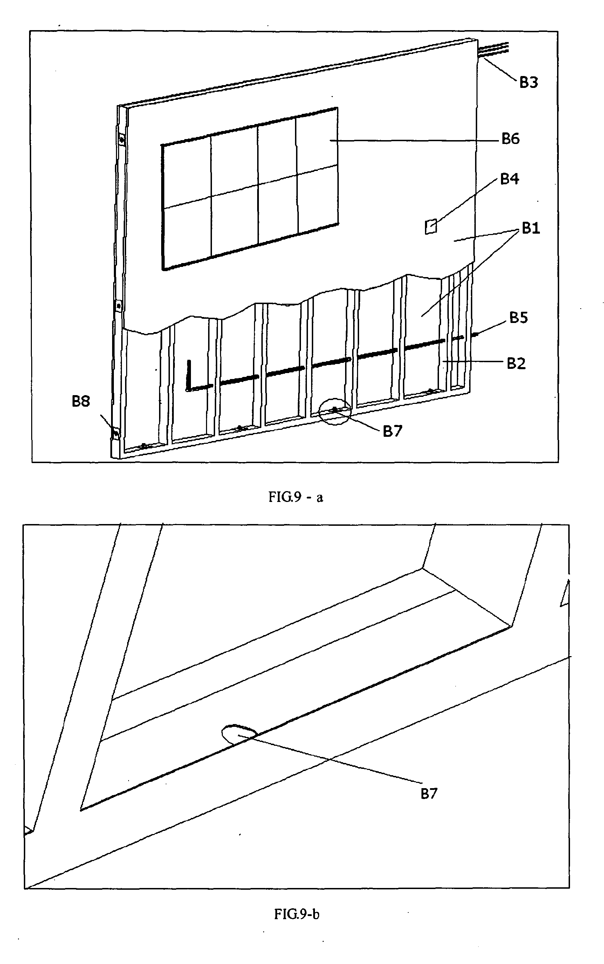

FIG 9-a illustrates the interior side of a wall panel of a house of this invention, wherein B1 may be a plaster board of which the surface is finished with decoration, or a fiber cement board when waterproofing is required, B2 is a structural frame, B3 are electricity wires, having a power connecting terminal at one end and at the other end being connected to an in-the-wall junction box, B4 may be a plug seat connected to the electricity wires, B5 is a water pipe pre-fixed in the frame at the factory, B6 is a waterproofing layer that may be ceramic tiles or other waterproofing materials as required by the customer or the applicable building codes, B7 is a hole for assembly on building site as illustrated in FIG. 9-b, B8 is a connector for assembly on building site. B1-B6 are parts to satisfy the structural and functional requirements of the building and B7-B8 are to facilitate the quick assembly on building site and has a function of structural connection.

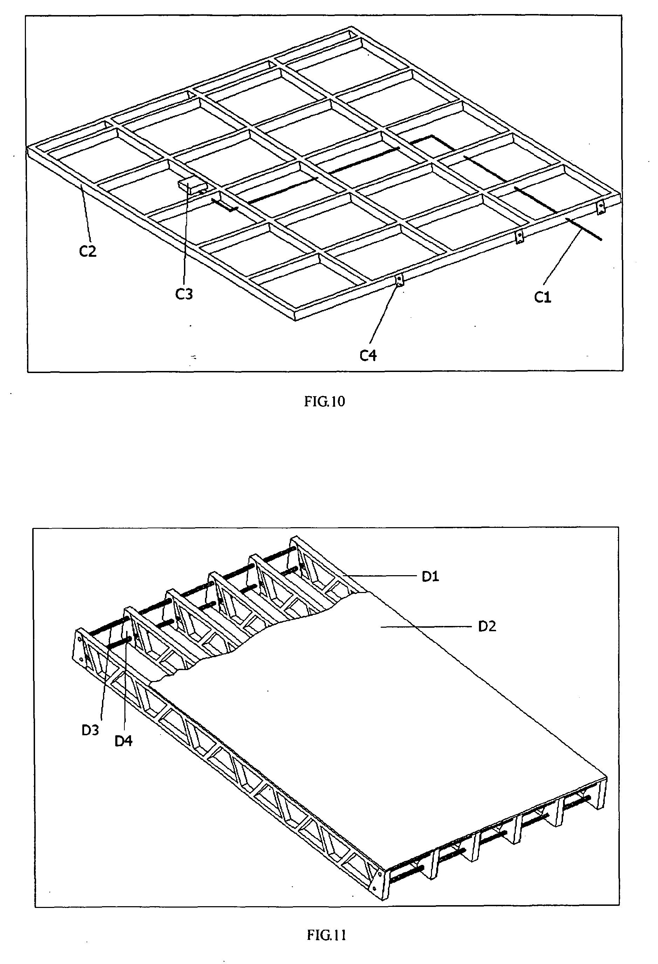

FIG 10 illustrates a ceiling frame of a house of this invention, wherein C1 are electricity wires pre-connected to an in-the-ceiling junction box at factory, C2 is a structural frame of the ceiling, C3 is the in-the-ceiling junction box pre-fixed to the frame at factory, and C4 is a connector for assembly on building site. C1-C3 are parts to satisfy the structural and functional requirements of the building and C4 is to facilitate the quick assembly on building site and has a function of structural connection. It may be allowed to add or remove functions of a prefab ceiling frame in accordance with the customer's requirements or the applicable building codes.

FIG 11 illustrates a floor panel of a house of this invention, wherein D1 is a floor joist, D2 is a structural covering layer of the flooring, D3 is a connection plate for assembly, and D4 is a steel bar for assembly. D1-D2 are parts to satisfy the structural and functional requirements of the building and D3-D4 are to facilitate the quick assembly on building site and has a function of structural connection. It may be allowed to add or remove functions of a floor panel in accordance with the customer's requirements or the applicable building codes.

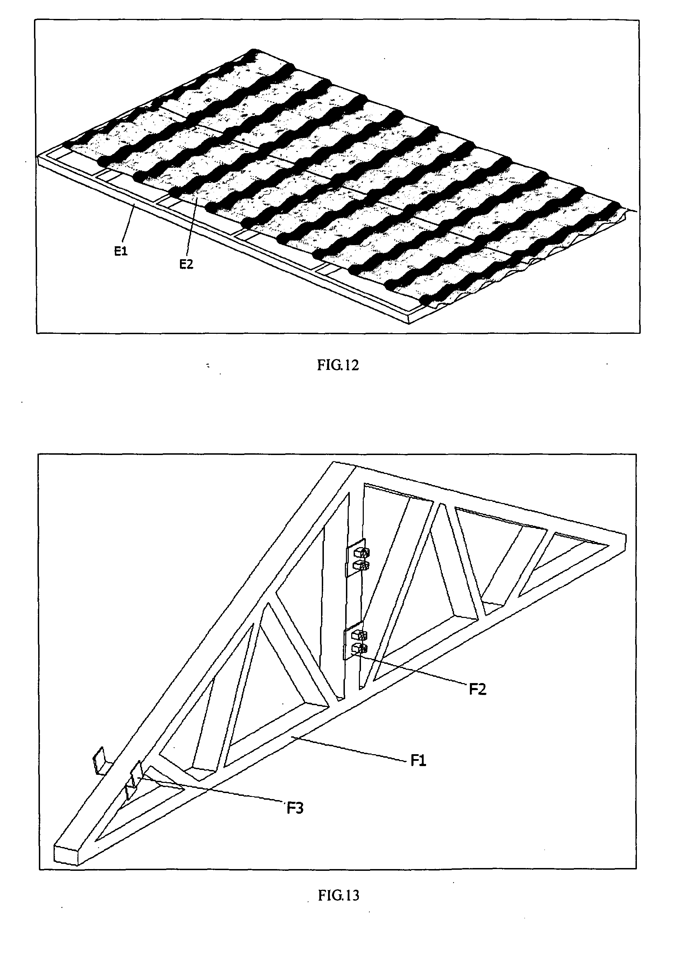

FIG 12 illustrates a roof panel of a house of this invention, wherein E1 is a structural frame, E2 may be a layer of colorbond roof tile or other types of tiles, or may be a layer of structural board plus various types of tiles.

FIG 13 illustrates a roof truss of a house of this invention, wherein F1 is a structural frame, F2 is a locating connector for truss assembly, and F3 is a locating clip for roof panel assembly.

The mentioned mechanical method to quickly assembly the mentioned all-functional prefab framed building structure of this invention may comprise the following locating and connecting methods and steps:
On building site, in accordance with the assembly drawings, locating bolts are anchored to a foundation slab, locators are fixed on the slab at the corners where wall panels are placed vertically between two locators by a general or dedicated crane and erected with the locating bolts, so that wall panels may be quickly located and erected.

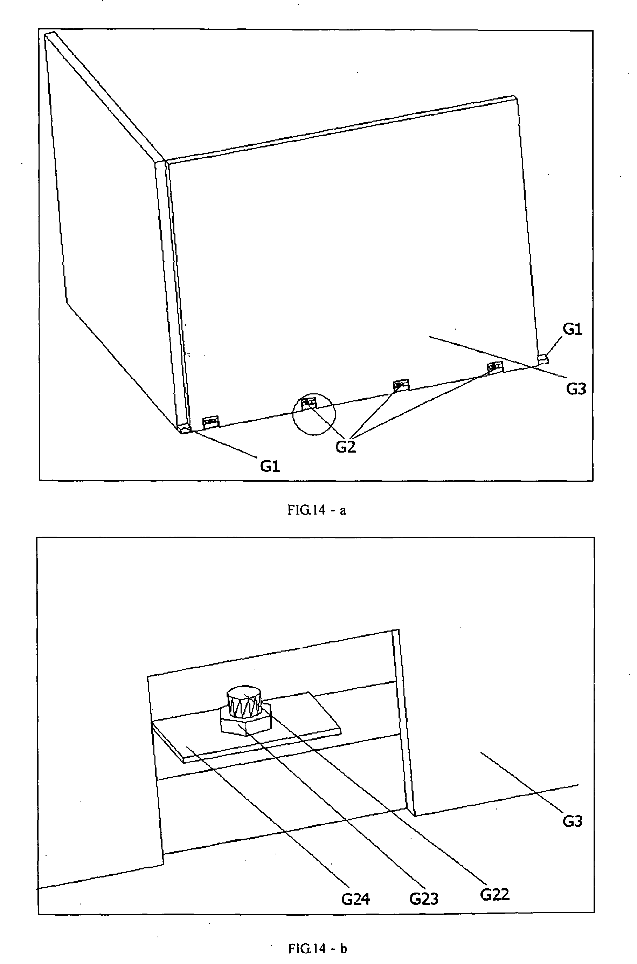

FIG. 14-a illustrates connection points of a wall panel and foundation slab, wherein G1 is a locator for the erection of a wall panel, G2 is a connector of a wall panel and foundation slab, G3 is a wall panel; as shown in FIG. 14-b, G3 is a wall panel, G22 is a locating bolt anchored on the foundation slab, G24 is a washer and G23 is a nut for assembly.

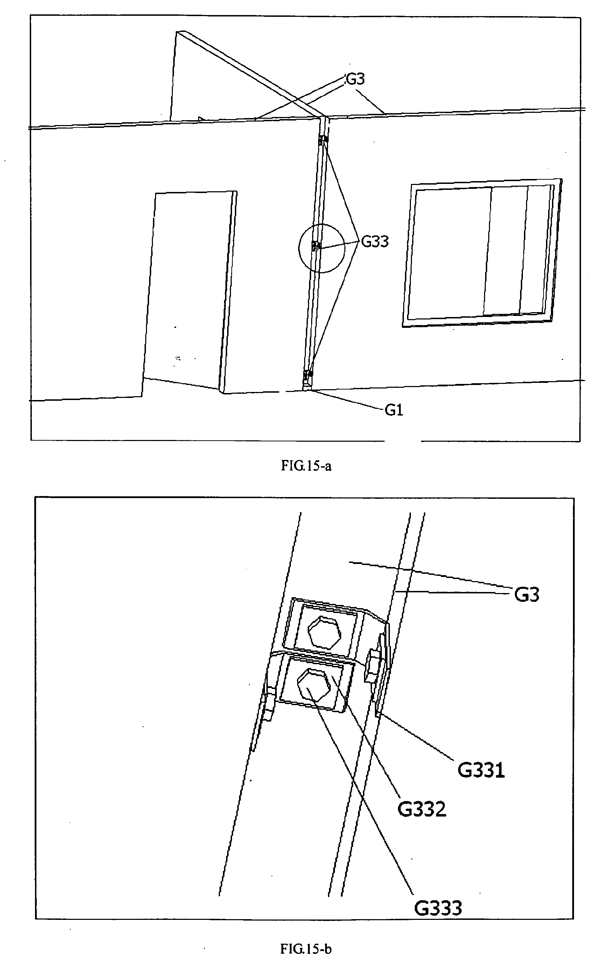

FIG. 15-a illustrates connection points of three wall panels, wherein G1 is a locator for the erection of a wall panel, G3 is a wall panel, G33 are connecting fasteners of wall panels; and a detailed view of G33 is shown in FIG. 15-b, wherein G3 is a wall panel, G331 is a wall connector, G332 is a washer and G333is a connecting bolt.

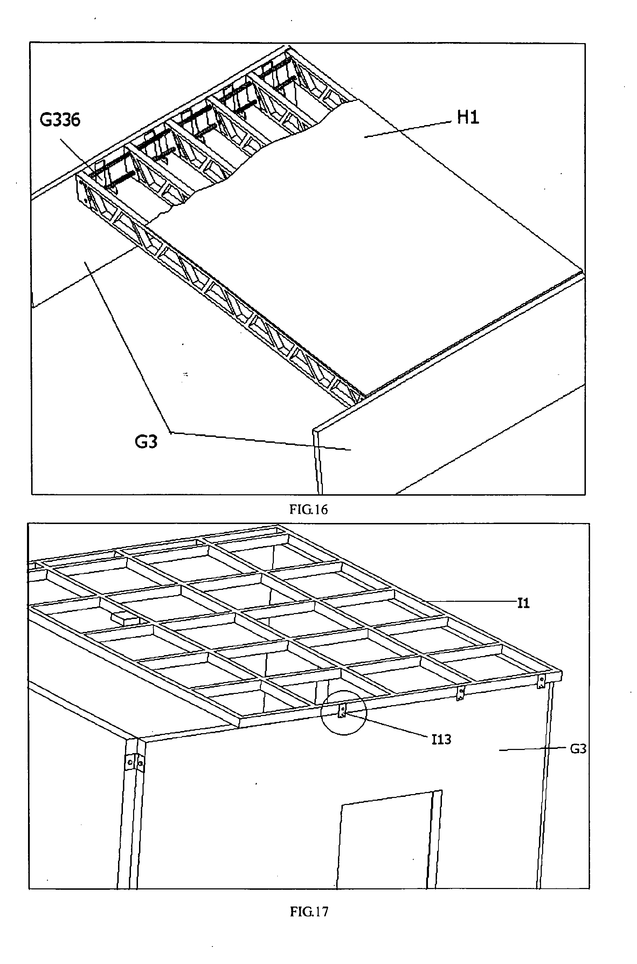

FIG. 16 illustrates assembly points of a floor panel and a wall panel, wherein H1 is a floor panel, G3 is a wall panel, and G336 is a locating clip-on connector that is fixed on the wall panel for the connection of the wall panel and the floor panel.

FIG. 17 illustrates assembly points of a ceiling frame and a wall panel, wherein G3 is a wall panel, I1 is a ceiling frame, and I13 is a locating clip-on connector that is pre-fixed on the ceiling frame.

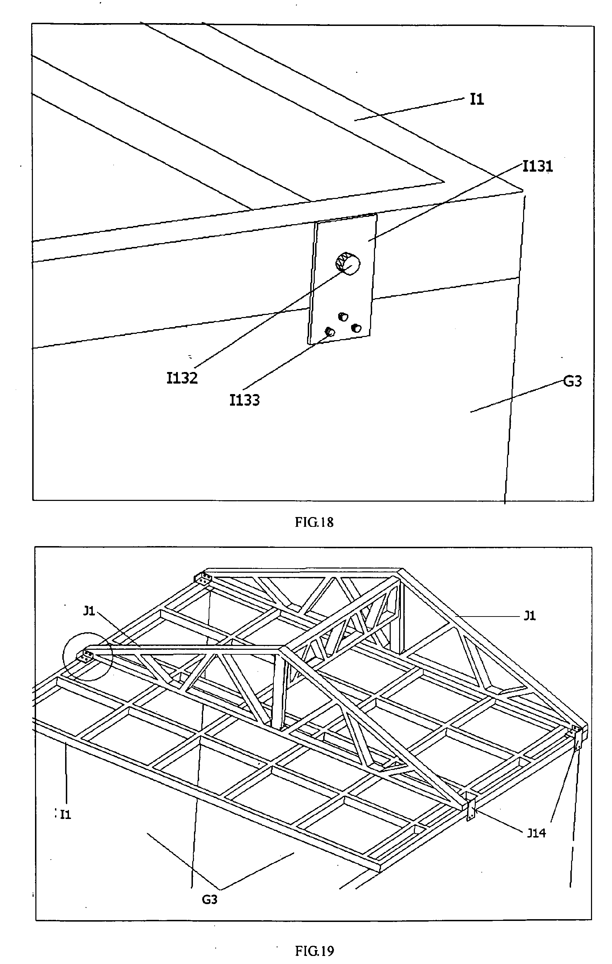

FIG. 18 illustrates a detailed view of I13, wherein G3 is a wall panel, I1 is a ceiling component, 1131 is a locating connector pre-fixed on the ceiling frame, I132 is a connecting bolt, and 1133 is a self-tapping screw.

FIG. 19 illustrates connection points of a roof truss, a ceiling component and a wall panel, wherein J1 is a roof truss, I1 is a ceiling component, G3 is a wall panel, and J14 is a connector of roof truss, wall panel and ceiling component.

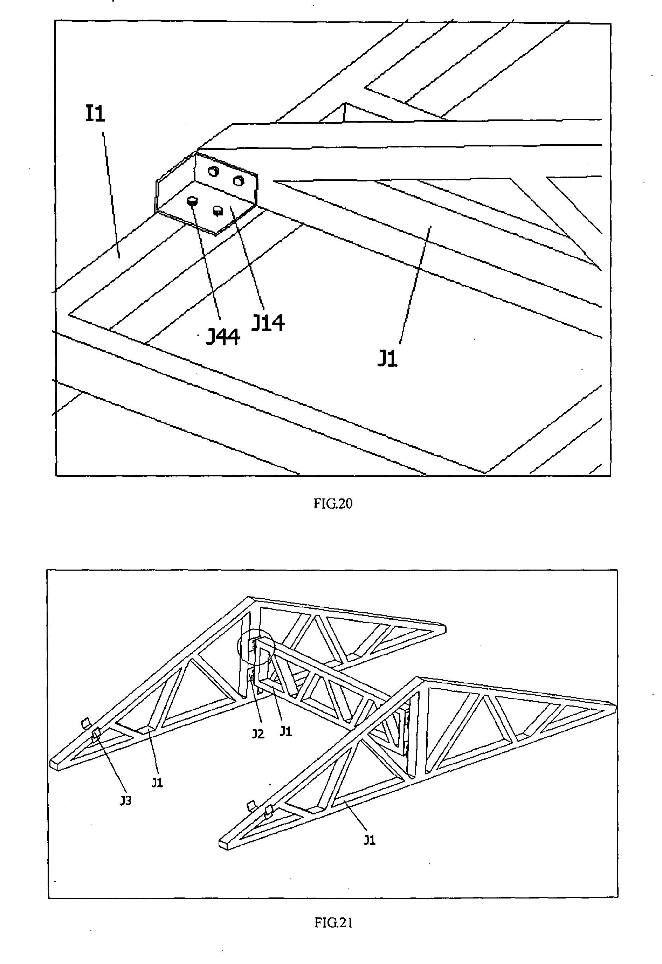

FIG. 20 illustrates a detailed view of J 14, wherein I1 is a ceiling component, J1 is a roof truss, J14 is a connector, and J144 is a self-tapping screw.

FIG. 21 illustrates 90-degree-connection points of roof trusses, wherein J1 is a roof truss, J2 is a 90-degree locating device of roof truss, and J3 is a locator for roof panel assembly.

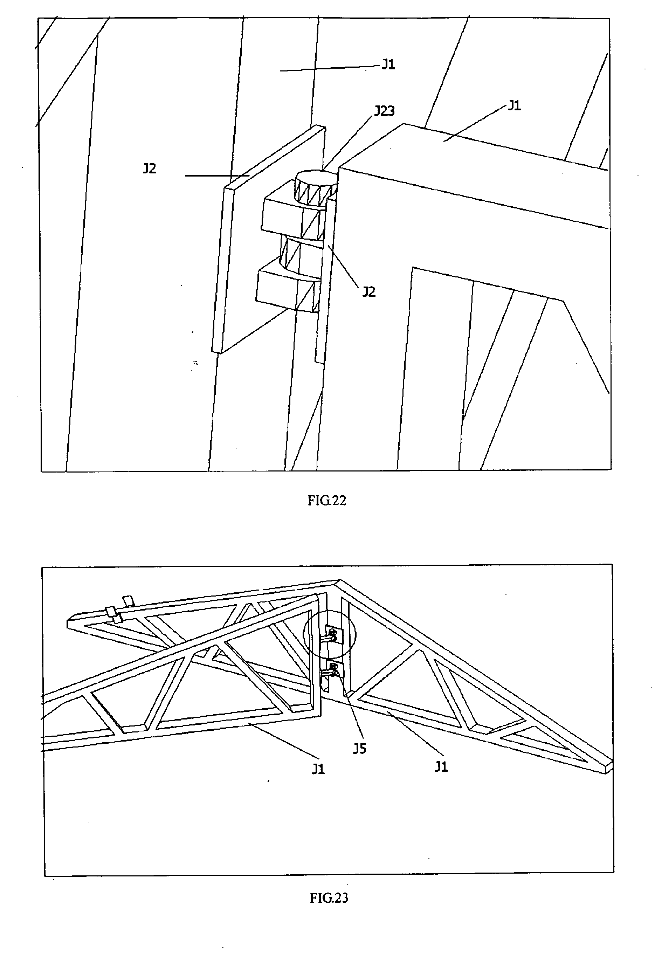

FIG. 22 illustrates a detail view of J2, wherein J1 is a roof truss, J2 is a 90-degree locating device of roof truss, and J23 is a locating dowel.

FIG. 23 illustrates other-angel-connection points of roof trusses, wherein J1 is a roof truss, J5 is an arbitrary-angel locating device of roof truss.

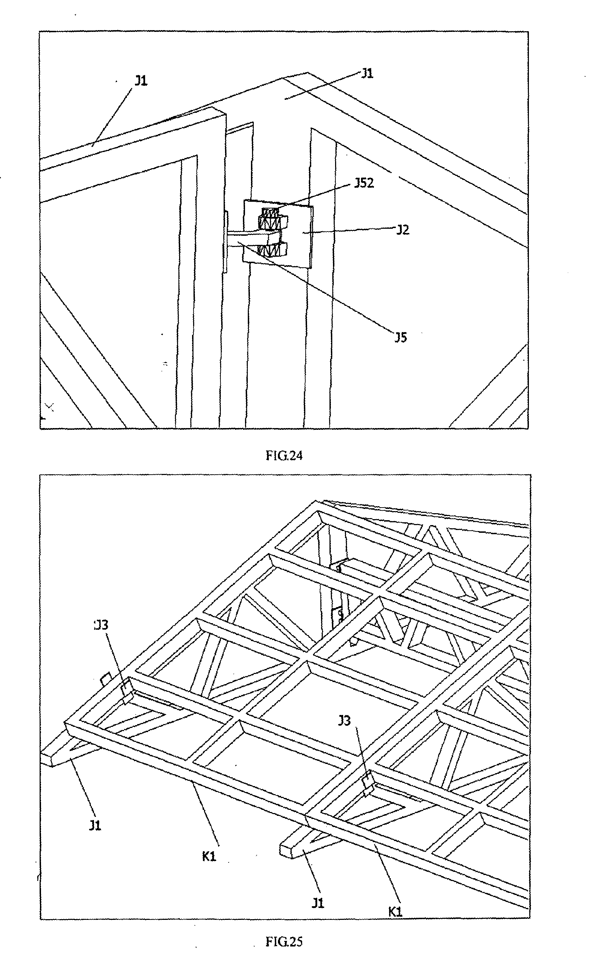

FIG 24 illustrates a detailed view of J5, wherein J1 is a roof truss, J2 is a 90-degree locating device of roof truss, J5 is an arbitrary-angel locating device of roof truss, and J52 is a locating dowel.

FIG. 25 illustrates assembly points of a roof panel and a roof truss, wherein J1 is a roof truss, K1 is a roof frame, and J3 is a locator for roof panel assembly pre-fixed on the roof truss. The roof panel may be fixed on the roof trusses by fasteners after being properly located.

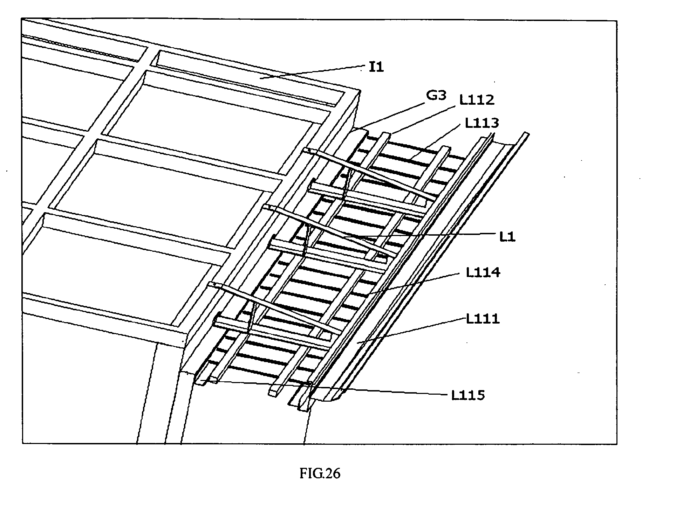

FIG. 26 illustrates assembly points of a gutter and eaves, wherein I1 is a ceiling component, G3 is a wall panel, L1 is a connector of eaves, L111 is a gutter, L112 is a clip-on hanger of eaves boards, L113 is a transverse eaves board, L114 is a vertical eaves board, and L115 is eaves molding for the transverse eaves board.

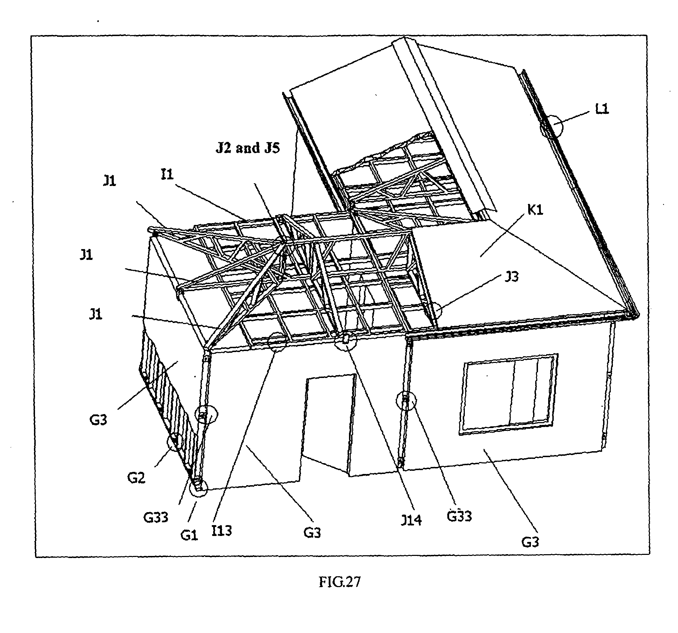

FIG. 27 illustrates a schematic view of a whole assembled house of this invention, wherein G3 is a wall panel, I1 is a ceiling component, J1 is a roof truss, K1 is a roof panel, G33 is a connecting points of wall panels, J14 is a connecting point of roof truss, wall panel and ceiling component, I13 is a locating connecting point of the ceiling component and the wall panel, J2 or J5 is a locating connecting points of roof trusses, J3 is a locating point on a roof truss for roof panel assembly, G2 is a locating connecting of a wall panel and foundation slab, G1 is a locating point for the erection of a wall panel, and L1 is a connector of eaves.

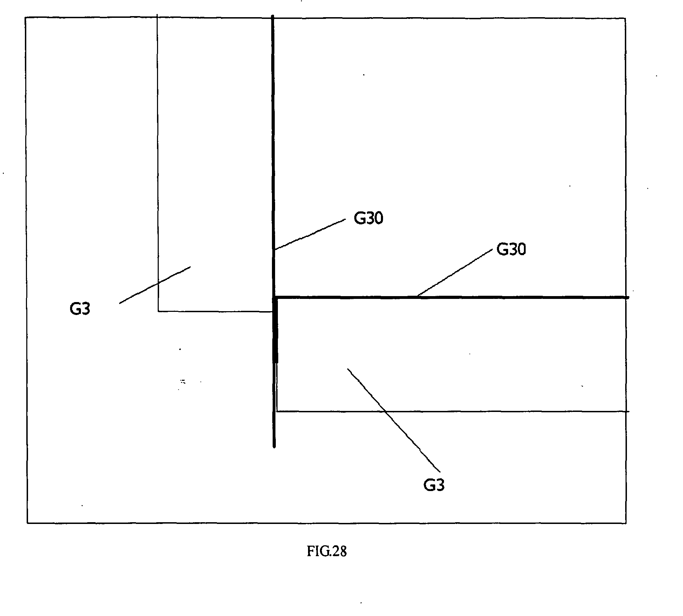

FIG. 28 illustrates a detailed decorating method for wall panel connection, wherein G3 is a wall panel, and G30 may be the finishing layer of a prefab wall panel, such as a layer of wall paper.

Taking FIG. 27 as an example, the quick method to mechanically assemble a prefab building of this invention comprises the following steps:
1. mounting a locator for wall panel G1 on a foundation slab;
2. erecting a wall panel G3 and fastening it on the foundation slab by connector G2;
3. erecting a wall panel G3' and fastening it on the foundation slab by connector G2;
4. connecting wall panels G3 and G3' in turn by connecting fasteners G33;
5. wall panels G3 and G3' are perpendicular to each other, they may be the elements with most attached facilitates or functions and assembly error shall be minimized;
6. repeating Step 2 and 4 to complete erection and connection of the four wall panels for the first building unit;
7. performing decorating treatment on surface of the wall panels at wall corners as shown in FIG. 28 in the process of assembling so that decoration at wall corners may be completed during the assembling process;
8. assembling a ceiling component of the first building unit, utilizing connector I13 to locate the ceiling component and connect it to the wall panels; and self-tapping screws may be used in the connection of the ceiling component and wall panels in accordance with the loading requirements of these building elements;
9. after assembling all the building units in turn, installing the roof trusses by locating and connecting roof trusses according to the layout utilizing locating devices J2 and J5;
10. connecting and fastening one or two ends of the roof trusses to the ceiling frame and wall panels utilizing connectors such as connectors J14;
11. installing an eaves system by firstly assembling L111-L115 to L1, hanging L1 to the ceiling component I1 and nailing and fixing L1 to the ceiling;
12. install roof panels by locating and laying roof panels K1 on the roof trusses in turn utilizing locators J3 that are pre-fixed on the roof trusses and fixing them on the roof trusses utilizing fastening connectors;
13. if it is a multi-story building, installing floor panels after assembling the wall panels of the first floor, by clipping the floor panels in turn from top to bottom to the connectors pre-fixed on the wall panels and locking them by connectors.

The above is a detailed description of preferred embodiments of this invention wherein there is provided a basis for those skilled in this field to make modification and replacement, but the modification and replacement shall be within the scope of this invention.

## Claims

1. A computerized prefab architect design (CPAD) system comprising:
an integrating device for integrating customer acknowledged building design elements including floor plans, plumbing layouts, electricity wiring layouts and structure/strength parameters into an assembly drawing;
a dividing device for forming segments and layouts of wall panels, floor/ceiling panels and roof panels, layouts of roof trusses, and segments and layouts of plumbing, wiring and jointers in accordance with a segmentation rule for buildings comprising a local building specification, segmentation based on a loading size of a shipping container, strength and structural requirements of buildings, requirements for convenient on-site work and flexible assembly lines at factories;
a generating device for generating a polygon stencil for components of the prefab architect based on said segments and layouts, said stencil including building frames, functional boards to be mounted onto the frames and functional accessories and appliances; and
an outputting device for forming data including a list of materials, an electronic guide display, CAM files, container loading plans and assembly drawings for on-site work in accordance with requirements for the fabrication in said stencil.

2. A computer controlled fabrication system for all-functional prefab framed buildings comprising:
a computerized prefab architect design (CPAD) system comprising:
an integrating device for integrating customer acknowledged building design elements including floor plans, plumbing layouts, electricity wiring layouts and structure/strength parameters into an assembly drawing;
a dividing device for forming segments and layouts of wall panels, floor/ceiling panels and roof panels, layouts of roof trusses, and segments and layouts of plumbing, wiring and jointers in accordance with a segmentation rule for buildings comprising a local building specification, segmentation based on a loading size of a shipping container, strength and structural requirements of buildings, requirements for convenient on-site work and flexible assembly lines at factories;
a generating device for generating a polygon stencil for components of the prefab architect based on said segments and layouts, said stencil including building frames, functional boards to be mounted onto the frames and functional accessories; and
an outputting device for forming data including a list of materials, an electronic guide display, CAM files, container loading plans and assembly drawings for on-site work in accordance with requirements for the fabrication in said stencil;
an intelligent manufacture management system and manufacture dispatch system (IMMS & MDS) comprising:
a replacing device for replacing default specifications with customer selected individualized specifications;
a planning device for generating dada including task lists for assembly and pre-process, a list of materials and a dispatch order to work stations;
a pre-processing device for CAM pre-processing precise parts and components based on said CAM files, and/or for pre-processing attached facilities of said functional accessories based on said electronic guide display;
a dispatching device for dispatching materials, pre-processed parts and components and the attached facilities of said functional accessories to corresponding work stations in accordance with said list of materials; and
an assembling device for assembling said polygon stencil in accordance with said electronic guide display into all-functional prefab framed building components suitable for container loading.

3. The system of claim 2, further comprises an interactive selection system (ISS), comprising:
a database device for storing various designed types of buildings and configuration selection modules thereof;
a quotation generating device for generating a quotation in accordance with a customer-selected type of buildings and a configuration selection module thereof; and
an order acknowledgement device for forming an inquiry form in accordance with a customers' acknowledgement for said quotation, and after admission for manufacture, said inquiry form forms an official order to IMMS & MDS.

4. The system of claim 1 or 2, wherein said building design elements further include layouts of electric appliances and fittings, layouts of sanitary appliances and fixtures, layouts of air conditioning system.

5. The system of claim 1 or 2, wherein said functional boards include structural boards, covering boards, waterproofing layer, thermal insulation layer and interior and exterior finishing layers.

6. The system of claim 1 or 2, wherein said functional accessories include windows, doors, plumbing, wiring and connectors.

7. The system of claim 6, wherein said functional accessories further include security facilities, intelligence control facilities, ventilating facilities, air-condition facilities, multimedia facilities, green energy source facilities and/or cycle water facilities.

8. The system of claim 6, further comprising an ERP platform based on a logistic module, a producing module, a trade module and a financial module, said ERP platform is used provide designed types of buildings and configuration selection modules thereof and provide said admission for manufacture for said inquiry form.

9. A computerized prefab architect design (CPAD) method comprising the steps of:
integrating customer acknowledged building design elements including floor plans, plumbing layouts, electricity wiring layouts and structure/strength parameters into an assembly drawing;
forming segments and layouts of wall panels, floor/ceiling panels and roof panels, layouts of ' roof trusses, and segments and layouts of plumbing, wiring and jointers in accordance with a segmentation rule for buildings comprising a local building specification, segmentation based on a loading size of a shipping container, strength and structural requirements of buildings, requirements for convenient on-site work and flexible assembly lines at factories;
generating a polygon stencil for components of the prefab architect based on said segments and layouts, said stencil including building frames, functional boards to be mounted onto the frames and functional accessories and appliances; and
forming data including a list of materials, an electronic guide display, CAM files, container loading plans and assembly drawings for on-site work in accordance with requirements for the fabrication in said stencil.

10. A computer controlled fabrication method for all-functional prefab framed buildings comprising the steps of:
integrating customer acknowledged building design elements including floor plans, plumbing layouts, electricity wiring layouts and structure/strength parameters into an assembly drawing;
forming segments and layouts of wall panels, floor/ceiling panels and roof panels, layouts of roof trusses, and segments and layouts of plumbing, wiring and jointers in accordance with a segmentation rule for buildings comprising a local building specification, segmentation based on a loading size of a shipping container, strength and structural requirements of buildings, requirements for convenient on-site work and flexible assembly lines at factories;
generating a polygon stencil for components of the prefab architect based on said segments and layouts, said stencil including building frames, functional boards to be mounted onto the frames and functional accessories; and
forming data including a list of materials, an electronic guide display, CAM files, container loading plans and assembly drawings for on-site work in accordance with requirements for the fabrication in said stencil;
replacing default specifications with customer selected individualized specifications;
generating dada including task lists for assembly and pre-process, a list of materials and a dispatch order to work stations;
CAM pre-processing precise parts and components based on said CAM files, and/or pre-processing attached facilities of said functional accessories based on said electronic guide display;
dispatching materials, pre-processed parts and components and the attached facilities of said functional accessories to corresponding work stations in accordance with said list of materials; and
assembling said polygon stencil in accordance with said electronic guide display into all-functional prefab framed building components suitable for container loading.

11. The method of claim 9 or 10, wherein said building design elements further include layouts of electric appliances and fittings, layouts of sanitary appliances and fixtures, layouts of air conditioning system.

12. The method of claim 9 or 10, wherein said functional boards include structural boards, covering boards, waterproofing layer, thermal insulation layer and interior and exterior finishing layers.

13. The method of claim 9 or 10, wherein said functional accessories include windows, doors, plumbing, wiring and connectors.

14. The method of claim 13, wherein said functional accessories further include security facilities, intelligence control facilities, ventilating facilities, air-condition facilities, multimedia facilities, green energy source facilities and/or cycle water facilities.

15. An all-functional prefab framed building structure fabricated by the system of claim 1 or 2, comprising:
a plurality of wall panels, at least one of said plurality of wall panels comprising a wall frame, a functional board arranged on the wall frame and connectors and locators for connecting and fastening the wall panel to another wall panel, to a foundation slab and to ceiling/flooring panels;
a ceiling panel comprising a ceiling frame, a functional board arranged on the ceiling frame and connectors and locators for connecting and fastening the ceiling panel to the wall panels;
a plurality of roof trusses comprise roof truss frames, connectors arranged on the roof truss frames for connecting and fastening roof trusses to each other, to the wall panels and to the ceiling panel, and roof locators for arranging roof; and
a plurality of roof panels comprising roof frames and tiles arranged on the roof.

16. The prefab framed building structure of claim 15, further comprising functional accessories arranged on said wall frame and/or said ceiling frame.

17. The prefab framed building structure of claim 15 or 16, wherein said functional boards include structural boards, covering boards, waterproofing layer, thermal insulation layer and interior and exterior finishing layers.

18. The prefab framed building structure of claim 16, wherein said functional accessories include windows, doors, plumbing, wiring and connectors.

19. The prefab framed building structure of claim 18, wherein said functional accessories further include security facilities, intelligence control facilities, ventilating facilities, air-condition facilities, multimedia facilities, green energy source facilities and/or cycle water facilities.

20. The prefab framed building structure of claim 15 or 16, further comprising beams, joists, ring beams, lattice beams manufactured and segmented based on a loading size of a shipping container.

21. The prefab framed building structure of claim 15 or 16, further comprising floor panels manufactured and segmented based on a loading size of a shipping container.

22. A method for quickly assembling the all-functional prefab framed building structure of claim 15 or 16, comprising the steps of:
a. mounting wall panel locators on a foundation slab;
b. fastening a plurality of wall panels on the foundation slab;
c. connecting said plurality of wall panels using connectors and locators;
d. connecting a ceiling panel to said wall panels using connectors;
e. positioning and fastening roof trusses to the ceiling panel using a locating device; and
f. locating and fastening roof panels to the roof trusses using locators and fasteners.

23. The method of claim 22, further comprising a step of connecting a floor panel to said plurality of wall panels using connectors and a step of connecting an additional plurality of wall panels to said floor panel using connectors after step c.
